# FASCICULE DE BREVET EUROPEEN

(11) **EP 1 518 307 B1**
(45) Date de publication et mention de la délivrance du brevet: **12.07.2006**
(21) Numéro de dépôt: 03722170.2
(22) Date de dépôt: 02.06.2003
(51) Int. Cl.: H02G 1/08

(54) **FURET D'INSTALLATION D'UN CABLE DANS UN CONDUIT**
STOPFEN ZUM INSTALLIEREN EINES KABELS IN EIN ROHR
PIG FOR INSTALLING A CABLE IN A CONDUIT

(30) Priorité: 01.07.2002 CH 114302
(43) Date de publication de la demande: 30.03.2005
(73) Titulaire: PLUMETTAZ SA, 1880 Bex (CH)
(72) Inventeur: OBERLI, Stéphane, CH-1880 Bex (CH); PLUMETTAZ, Gérard, CH-1880 Bex (CH)
(74) Mandataire: Reuteler, Raymond Werner
(86) Numéro de dépôt international: PCT/CH2003/000344
(87) Numéro de publication internationale: WO 2004/004086

(56) Documents cités:
- DE-A- 4 312 332
- DE-U- 9 014 672

## Description

La présente invention se rapporte au domaine technique des installations de câbles, par exemple à fibres optiques ou électriques, à l'intérieur de conduits d'installation enterrés et/ou immergés. Sous le terme "câbles", il faut aussi comprendre des tubes ou autres permettant de transporter de l'énergie, des fluides et des signaux électriques, lumineux ou autres. Le terme câble concerne également des câbles électriques de basses, moyennes et hautes puissances, monophasés ou triphasés.

On connaît différentes méthodes pour installer des câbles à l'intérieur de conduits. Ces méthodes sont définies ci-après.

Par "tirage", on entend que le câble est attaché par son extrémité à une élingue déjà installée dans le conduit. Cette élingue est accrochée au tambour d'un treuil qui enroule cette dernière et permet l'installation du câble dans le conduit, par glissement dudit câble à l'intérieur dudit conduit.

Par "tirage-poussage", on entend un tirage et un poussage simultanés avec l'utilisation de moyens permettant de pousser le câble à son entrée dans le conduit, et ce pour diminuer les efforts de traction sur la tête de câble et pour augmenter la distance d'installation. Des moyens d'entraînement du câble vers la mi-parcours peuvent également être prévus.

Par "soufflage", on entend que le conduit d'installation est mis en pression, à l'aide d'un fluide, entre les moyens d'alimentation en câble et un furet étanche accroché à la tête du câble. La pression régnant à l'intérieur du conduit permet ainsi de déplacer le furet, tirant sur la tête de câble. La mise sous pression se fait généralement avec de l'air.

Par "soufflage-poussage", on entend l'utilisation de moyens permettant de pousser le câble à son entrée dans le conduit, associés aux moyens mis en oeuvre dans la méthode dite par "soufflage". Là encore, on obtient une augmentation de la distance d'installation du câble.

Par "flottage-poussage" et/ou "portage-poussage", on entend une technique dans laquelle un fluide, généralement de l'air ou de l'eau, est injecté dans le conduit à une vitesse supérieure à la vitesse de progression du câble, et c'est le frottement du fluide sur la gaine extérieure du câble qui exerce la force de traction. Dans cette technique d'installation, la pression statique de l'air ou du liquide à l'intérieur du conduit a pour effet de pousser le câble hors du conduit.

Dans certaines techniques de "tirage-poussage", l'on injecte également de l'eau dans le conduit. La force de traction provient d'un furet fixé à l'extrémité de tête du câble sur laquelle s'exerce la pression d'eau injectée dans le conduit. A cette fin, le furet est muni d'un ou de plusieurs joints.

Un des avantages des techniques à injection d'eau ou d'autres liquides est la réduction de la force d'appui du câble contre la paroi intérieure du conduit due à la force d'Archimède et par conséquent des forces de frottement. La distance d'installation est toutefois limitée par la pression d'eau maximale admissible, qui est déterminée par la pression maximale qui peut être appliquée sur le furet.

En raison des rayons de courbure dans le conduits, ainsi que la déformation sous forme ovale des profils des conduits, les furets existants sont munis d'une série juxtaposée de lèvres souples en caoutchouc en forme conique ou en forme de disques. Ces lèvres souples ont le grand désavantage de ne pas supporter une pression très élevée ne dépassant normalement pas quelques bars, de sorte que la force de tirage du furet est relativement limitée ; le dispositif décrit dans DE 43 12 332, représentant l'état de la technique le plus proche, comprend ces inconvénients.

Au vu de ces inconvénients, un but de l'invention est de fournir un furet d'installation de câbles dans des conduits qui permet d'augmenter la distance d'installation du câble, c'est-à-dire la longueur du câble qui peut être inséré dans un conduit.

Il est avantageux de fournir un furet d'installation de câbles apte à être utilisé dans les techniques d'installation dans lesquelles un liquide, par exemple de l'eau, est injecté dans le conduit de câble.

Il est également avantageux de fournir un furet pour l'installation de câbles dans un conduit qui est fiable, économe et qui réduit voire élimine des fuites de liquide.

Il est avantageux de fournir un furet d'installation de câbles qui peut être également utilisé pour extraire un câble d'un conduit.

Des buts de l'invention sont réalisés par un furet pour l'installation de câbles selon la revendication 1.

Dans la présente invention, un furet d'installation d'un câble dans un conduit comporte un corps et un joint destiné à épouser la surface intérieure du conduit, le corps comprenant une partie tubulaire radialement élastique sur laquelle est monté le joint, et une partie de support fixée à, ou solidaire avec la partie tubulaire, la partie de support ayant une surface de guidage destinée à guider le furet dans le conduit, le diamètre de la surface de guidage étant légèrement inférieur au diamètre maximal du joint, de façon à ce que la partie de support déforme radialement la partie tubulaire lors du passage du furet dans des parties du conduit déformées. La partie de support agit également comme support axial pour le joint.

Avantageusement, le fait que le support axial du joint a un diamètre s'approchant d'un diamètre extérieur du joint permet d'éviter les problèmes de renversement des lèvres du joint et donc de supporter des pressions plus élevées, tout en permettant la déformation radiale du joint, en le montant sur une partie tubulaire élastique qui s'adapte aux déformations du conduit à travers les parties de support.

Les parties du support peuvent être sous forme de dents s'étendant radialement de la partie tubulaire du corps. Ces parties peuvent être formées intégralement avec le corps en une matière offrant de faibles coefficients de résistance, telle que certains plastiques de type POM, nylon ou teflon. Le corps peut en outre comprendre une paroi radiale fermant partiellement ou complètement une extrémité de la partie tubulaire, cette paroi servant d'une part à stabiliser le corps, d'autre part à bloquer le transfert de fluides. Afin de limiter la pression hydrostatique à l'intérieur du corps, une valve tarée sous forme d'un réducteur de pression peut être montée dans le corps, notamment dans la paroi radiale. Avantageusement, un ou plusieurs orifices radiaux pour l'injection d'une certaine quantité d'eau a l'aval du joint sont pratiqués dans le corps afin de lubrifier et de refroidir la lèvre du joint.

On peut avantageusement monter deux ou plusieurs corps en tandem axial de façon à éviter les pertes de charge lorsqu'il y a des irrégularités dans le conduit, par exemple au passage d'un raccord entre deux extrémités de conduits.

Dans une telle configuration, des orifices radiaux en communication avec le réducteur de pression sont disposés entre deux joints, ce qui permet de répartir la pression entre les joints successifs ainsi que la pression différentielle entre l'intérieur de la partie tubulaire du corps et l'extérieur. L'assemblage de plusieurs corps et de joints correspondants permet également de supporter des pressions d'injection d'eau dans le conduit plus élevé et donc d'augmenter la distance d'installation.

Des éléments de guidage peuvent être montés à chaque extrémité axiale du corps ou de la pluralité des corps, le tout par exemple fixé par des moyens de fixation comprenant par exemple un axe de fixation central auquel on peut également fixer un anneau ou crochet ou autre élément d'attache pour attacher l'extrémité de tête du câble.

Les éléments de guidage peuvent avantageusement être munis d'éléments élastiques, tels que les doigts élastiques disposés sur le pourtour de l'élément, dans le but de s'adapter à la déformation du conduit.

L'élément de guidage en tête peut avantageusement être muni d'un réceptacle conique ou essentiellement conique pour son positionnement sur l'embout du câble lors de l'utilisation du furet pour l'extraction du câble d'un conduit.

Plusieurs furets comprennent au moins un corps, un joint, un moyen de guidage et un réducteur de pression et peuvent être accouplés par des moyens de fixations articulés.

D'autres caractéristiques et aspects avantageux de l'invention ressortiront également de la description détaillée donnée ci-après, en référence aux dessins annexés dans lesquels:
la Fig. 1 est une vue d'une forme d'exécution d'un furet d'installation d'un câble dans un conduit selon l'invention;
la Fig. 2 est une vue dans la direction de la flèche II de la Fig. 1;
la Fig. 3 est une coupe selon les lignes III-III de la Fig. 2;
la Fig. 4 est une vue d'un corps du furet selon l'invention;
la Fig. 5 est une vue dans la direction de la flèche V de la Fig. 4;
la Fig. 6 est une coupe longitudinale d'une autre forme d'exécution d'un furet selon l'invention.

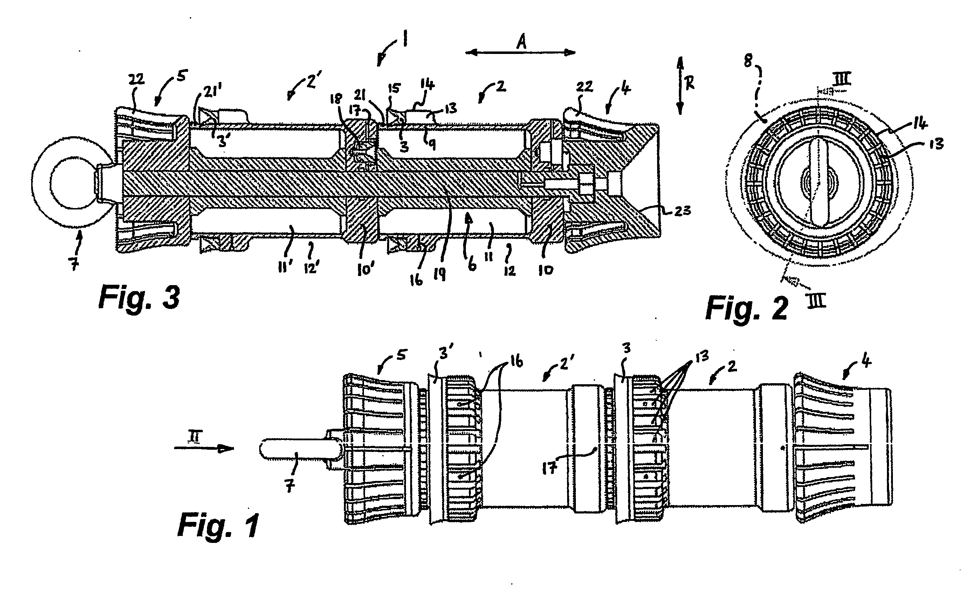

En faisant référence aux figures, plus particulièrement aux figures 1 à 3, un furet de pose de câble dans un conduit comporte un corps 2, un joint 3, des éléments de guidage avant et arrière 4, 5, des moyens de fixation 6 des différentes parties du furet, et un organe d'attache 7 pour attacher le furet à d'une extrémité d'un câble à installer dans un conduit. Un embout (non montré) est monté sur l'extrémité du câble, l'embout comprenant un organe d'attache complémentaire.

Le corps 2 comprend une partie tubulaire radialement élastique 9, une partie de paroi radiale 10 fermant au moins partiellement une extrémité de la partie tubulaire 9, à l'exception des passages pour les moyens de fixation 6 ainsi que des orifices et cavités pour recevoir une valve ou un réducteur de pression. La partie de paroi 10 permet, d'une part, de séparer la cavité intérieure 11 du corps de l'extérieur 12 et, d'autre part, de stabiliser et rigidifier le corps et pour permettre son assemblage à d'autres corps et/ou aux éléments de guidage 4, 5. La partie tubulaire est, dans cette forme d'exécution, essentiellement sous forme d'un cylindre creux ayant une paroi relativement mince afin d'être radialement élastique pour des raisons que l'on comprendra mieux dans la description ci-après.

Le corps 2 comporte en outre une partie de support 13 rigide qui s'étend de la partie tubulaire 9 et qui sert comme support axial du joint 3. Dans cette forme d'exécution, la partie de support de joint 13 est sous forme de dents s'étendant de manière solidaire de la partie de tube 9 dans une direction radiale, et munies d'une surface périphérique de guidage 14 ayant un diamètre légèrement inférieur au diamètre du conduit dans lequel le furet est destiné à être inséré, et donc légèrement inférieur au diamètre maximal du joint 3.

La surface de guidage 14 sert donc, d'une part, à centrer et guider le furet et notamment le joint 3 du furet dans le conduit et, d'autre part, de former un support axial rigide pour le joint qui est de préférence un joint à lèvres, par exemple sous forme de V, pour supporter des hautes pressions. Au passage d'une partie de conduit 8 déformée, telle que montrée dans la Fig. 2, les surfaces périphériques de guidage 14 des parties de support de joint 13 viennent en appui contre la surface intérieure du conduit où le diamètre est réduit et déforment élastiquement la partie du tubulaire 9 sur laquelle elles sont montées. La surface périphérique de guidage 14 est de préférence en un matériau ayant un faible coefficient de frottement afin de réduire les forces de frottement agissant sur le furet.

Quand la partie tubulaire 9 se déforme, le joint 3 monté sur la partie tubulaire suit la déformation et permet d'assurer une bonne étanchéité entre la surface intérieure du conduit et le corps. Cette construction permet notamment d'utiliser un joint, tel qu'un joint à lèvres, adapté à des utilisations de haute pression, par exemple des pressions de l'ordre de 35 bars qui permettront d'augmenter substantiellement la longueur du câble qui peut être insérée dans un conduit.

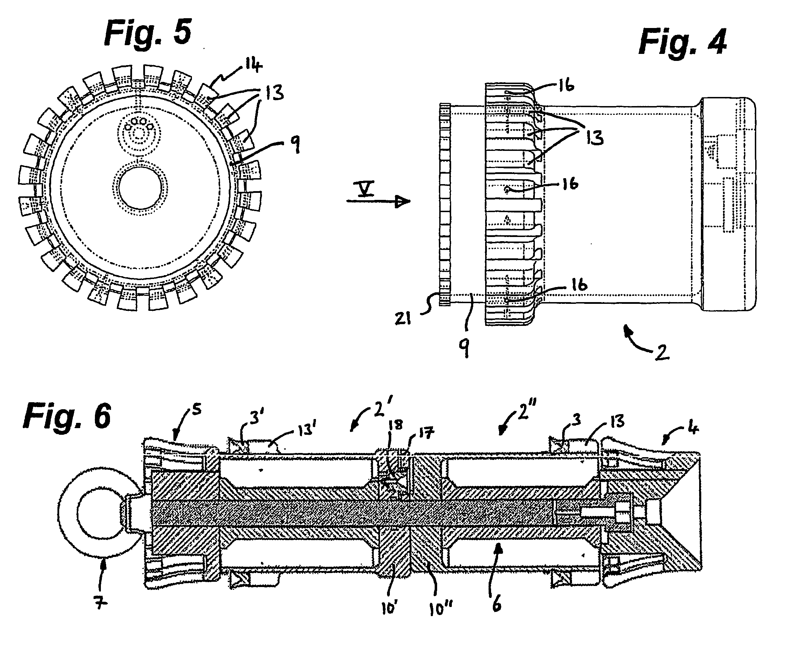

Afin de lubrifier et refroidir les lèvres 15 du joint 3, des petits orifices radiaux 16 traversent la partie tubulaire 9 et/ou les parties de support de joint 13 formant ainsi un passage pour l'eau de la cavité intérieure 11 à l'espace extérieure 12 du corps. Le nombre et le diamètre des orifices, au nombre par exemple de 4 à 8 sur le pourtour du corps, sont adaptés pour fournir suffisamment d'eau pour le refroidissement et la lubrification du joint sans pour autant causer une perte de charge significative. On peut également fournir l'eau de refroidissement et de lubrification des joints 3 à travers une valve ou un réducteur de pression 18, par exemple montée dans une cavité dans la partie de paroi 10 du corps, ce réducteur de pression 18 ayant une entrée communiquant avec la cavité intérieure 11 du corps et une sortie 17 communiquant avec l'espace extérieur 12. Au cas où le réducteur de pression 16 est monté entre deux joints 3, 3' sur des corps respectifs 2, 2', tels que montrés dans la Fig. 3 ou la Fig. 6, il sert à réduire la pression différentielle entre l'espace extérieur 12, 12', 12" et la cavité intérieure 11, 11', 11" des corps. Ceci permet notamment de répartir la charge de poussée sur les deux joints 3, 3', 3".

Dans la forme d'exécution de la Fig. 3, les corps 3', 3 sont essentiellement identiques, mais il est possible de monter des corps en opposition tels que montrés dans la Fig. 6, où les parois radiales 10', 10' des corps 2', respectivement 2" sont plaquées l'un contre l'autre.

Le montage en opposition selon la forme d'exécution de la Fig. 6 permet d'augmenter la distance entre les joints 3', 3" et les parties de support 13', 13", ce qui peut améliorer le guidage ainsi que l'étanchéité des joints du furet.

Les moyens de fixation 6 du furet peuvent comprendre un axe central 19 disposé le long de l'axe central du furet et comprimant axialement les éléments de guidage avant et arrière 4, 5 ainsi que les corps 2, 2', 2" à travers des manchons 20 montés coaxialement autour de l'axe central 19. Les manchons 20 servent à assurer que l'extrémité ouverte 21, 21', 21" de la partie tubulaire du corps 9 est libre afin de permettre son déplacement élastique. La longueur des manchons 20 est donc prévue de façon à laisser un certain jeu entre l'extrémité ouverte 21, 21', 21" de la partie tubulaire et l'élément adjacent, soit un élément de guidage d'extrémité 4, 5 ou la paroi 10' du corps adjacent.

Les éléments de guidage avant et arrière 4, 5 sont avantageusement munis de doigts élastiques 22 disposés sur le pourtour et étant légèrement inclinés afin de donner une forme essentiellement conique aux éléments de guidage. Les doigts élastiques 22 permettent d'une part de centrer le furet dans le conduit et, d'autre part, d'éviter un accrochage du furet avec l'intérieur du conduit, notamment avec des irrégularités ou des discontinuités par exemple dues au raccordement d'extrémités du conduit ou à une surface endommagée. Les doigts élastiques permettent en outre aux éléments de guidage de s'adapter au profil intérieur du conduit.

L'élément de guidage avant 4 est avantageusement muni d'un réceptacle 23 de forme essentiellement conique ou ayant une autre forme évasée sur sa face avant afin de loger et centrer un embout monté sur un câble devant être extrait d'un conduit. Le furet peut ainsi non seulement être utilisé pour le tirage d'un câble lors de son l'installation dans un conduit, mais également pour le poussage d'un câble lors de son extraction d'un conduit. Le centrage de l'embout du câble dans la face avant évasée 23 de l'élément de guidage permet d'éviter des problèmes de coincement du furet dans le conduit, notamment lors de la prise de virages dans le conduit.

## Revendications

1. Furet d'installation d'un câble dans un conduit, comportant un corps (2, 2', 2") et un joint (3, 3', 3") destiné à épouser la surface intérieure du conduit (8), le corps comprenant une partie tubulaire (9) radialement élastique sur laquelle est monté le joint, **caractérisé en ce qu'**il comporte en outre une partie de support (13, 13', 13") fixée à, ou solidaire avec ladite partie tubulaire, la partie de support ayant une surface de guidage (14) destinée à guider le furet dans le conduit, le diamètre de la surface de guidage étant légèrement inférieur au diamètre maximal du joint, de façon à ce que la partie de support déforme radialement la partie tubulaire lors du passage du furet dans des parties du conduit déformées, ladite partie de support servant de support axial du joint.

2. Furet selon la revendication 1, **caractérisé en ce que** la partie de support est sous forme de dents s'étendant radialement de la partie tubulaire.

3. Furet selon la revendication 1 ou 2, **caractérisé en ce que en ce que** la partie de support est formée intégralement avec la partie tubulaire.

4. Furet selon l'une des revendications précédentes, **caractérisé en ce qu'**il comporte au moins deux corps (2, 2', 2") et joints (3, 3', 3").

5. Furet selon la revendication précédente, **caractérisé en ce que** les corps (2, 2') sont essentiellement identiques et montés axialement en tandem.

6. Furet selon la revendication 4, **caractérisé en ce que** les corps sont montés axialement en opposition, les joints (3', 3") étant montés aux extrémités opposées du furet.

7. Furet selon la revendication 4, 5 ou 6, **caractérisé en ce qu'**il comporte un réducteur de pression (18) en communication avec une cavité intérieure (11') du corps en amont et un espace extérieur (12') par des orifices (17) afin de répartir la pression entre les deux joints (3, 3', 3").

8. Furet selon l'une des revendications précédentes, **caractérisé en ce que** le joint est un joint à lèvres haute pression.

9. Furet selon l'une des revendications précédentes, **caractérisé en ce qu'**il comporte en outre un élément de guidage avant (4) comprenant une face avant conique ou évasée formant un réceptacle pour loger un embout de câble à extraire du conduit.

10. Furet selon l'une des revendications précédentes, **caractérisé en ce que** le furet comprend des éléments de guidage avant et arrière (4, 5), les éléments de guidage comprenant des doigts élastiques (22) inclinés de manière à donner une forme essentiellement conique aux éléments de guidage.

11. Furet selon l'une des revendications précédentes, **caractérisé en ce que** la partie tubulaire du corps a essentiellement la forme d'un cylindre creux ayant une extrémité ouverte et une extrémité fermée au moins partiellement par une paroi radiale, le joint et la partie du support étant disposés à proximité de l'extrémité ouverte.

## Claims

1. A pig for installing a cable in a conduit, comprising a body (2, 2', 2") and a seal (3, 3', 3") intended to follow the internal surface of the conduit (8), the body comprising a radially elastic tubular part (9) on which the seal is mounted, **characterised in that** it comprises further a support part (13, 13', 13") fixed to or integral with the tubular part, the support part having a guide surface (14) intended to guide the pig in the conduit, the diameter of the guide surface being slightly less than the maximum diameter of the seal, so that the support part radially deforms the tubular part when the pig passes through deformed parts of the conduit, said support part serving of axial support of the seal.

2. A pig according to Claim 1, **characterised in that** the support part is in the form of teeth extending radially in the tubular part.

3. A pig according to Claim 1 or 2, **characterised in that** the support part is formed integrally with the tubular part.

4. A pig according to one of the preceding claims, **characterised in that** it comprises at least two bodies (2, 2', 2") and seals (3, 3', 3").

5. A pig according to the preceding claim, **characterised in that** the bodies (2, 2') are essentially identical and mounted axially in tandem.

6. A pig according to Claim 4, **characterised in that** the bodies are mounted axially in opposition, the seals (3', 3") being mounted at the opposite ends of the pig.

7. A pig according to Claim 4, 5 or 6, **characterised in that** it comprises a pressure reducer (18) in communication with an internal cavity (11') in the body upstream and an external space (12') through orifices (17) in order to distribute the pressure between the two seals (3, 3', 3").

8. A pig according to one of the preceding claims, **characterised in that** the seal is a high-pressure lip seal.

9. A pig according to one of the preceding claims, **characterised in that** it also comprises a front guidance element (4) comprising a conical or splayed front face forming a receptacle for housing a cable ferrule to be extracted from the conduit.

10. A pig according to one of the preceding claims, **characterised in that** the pig comprises front and rear guidance elements (4, 5), the guidance elements comprising elastic fingers (22) inclined so as to give an essentially conical shape to the guidance elements.

11. A pig according to one of the preceding claims, **characterised in that** the tubular part of the body has essentially the shape of a hollow cylinder having an open end and an end at least partially closed by a radial wall, the seal and the support part being disposed close to the open end.

## Patentansprüche

1. Führungskopf für die Kabelverlegung in einer Leitung mit einem Körper (2, 2', 2") und einer Dichtung (3, 3', 3") zur Anpassung an die Innenfläche der Leitung (8), wobei der Körper ein radial elastisches rohrförmiges Teil (9) umfasst, an dem die Dichtung angebracht wird, **dadurch gekennzeichnet, dass** der Führungskopf darüber hinaus ein an diesem rohrförmigen Teil befestigtes oder mit ihm einstückig geformtes Trägerteil (13, 13', 13") umfasst, das eine Führungsfläche (14) zur Führung des Führungskopfs in der Leitung aufweist, wobei der Durchmesser der Führungsfläche derart etwas geringer als der maximale Durchmesser der Dichtung ist, dass das Trägerteil das rohrförmige Teil bei der Durchführung des Führungskopfes in verformten Teilen der Leitung radial verformt, wobei das Trägerteil als axialer Träger der Dichtung verwendet wird.

2. Führungskopf nach Anspruch 1, **dadurch gekennzeichnet, dass** das Trägerteil die Form von Zähnen aufweist, die sich radial vom rohrförmigen Teil erstrecken.

3. Führungskopf nach Anspruch 1 oder 2, **dadurch gekennzeichnet, dass** das Trägerteil vollständig mit dem rohrförmigen Teil ausgebildet wird.

4. Führungskopf nach einem der vorstehenden Ansprüche, **dadurch gekennzeichnet, dass** er mindestens zwei Körper (2, 2', 2") und Dichtungen (3, 3', 3") umfasst.

5. Führungskopf nach einem der vorstehenden Ansprüche, **dadurch gekennzeichnet, dass** die Körper (2, 2') im Wesentlichen identisch sind und axial in Tandemanordnung befestigt werden.

6. Führungskopf nach Anspruch 4, **dadurch gekennzeichnet, dass** die Körper axial in Gegenstellung angeordnet werden, wobei die Dichtungen (3', 3") an den entgegen gesetzten Enden des Führungskopfs befestigt werden.

7. Führungskopf nach Anspruch 4, 5 oder 6, **dadurch gekennzeichnet, dass** er einen Druckminderer (18) umfasst, der durch Bohrungen (17) mit einer Innenhöhlung (11') des vorgelegenen Körpers und einem Außenbereich (12') verbunden ist, um den Druck zwischen den beiden Dichtungen zu verteilen (3, 3', 3").

8. Führungskopf nach einem der vorstehenden Ansprüche, **dadurch gekennzeichnet, dass** die Dichtung eine Hochdrucklippendichtung ist.

9. Führungskopf nach einem der vorstehenden Ansprüche, **dadurch gekennzeichnet, dass** er darüber hinaus ein vorderes Führungselement (4) umfasst, dass eine konische oder ausgebauchte Vorderseite aufweist, die einen Behälter für die Aufnahme eines aus der Leitung herauszuziehenden Kabelendstücks ausbildet.

10. Führungskopf nach einem der vorstehenden Ansprüche, **dadurch gekennzeichnet, dass** der Führungskopf vordere und hintere Führungselemente (4, 5) umfasst, wobei die Führungselemente elastische Finger (22) aufweisen, die derart geneigt sind, dass sie den Führungselemenfien eine im Wesentlichen konische Form geben.

11. Führungskopf nach einem der vorstehenden Ansprüche, **dadurch gekennzeichnet, dass** das rohrförmige Teil des Körpers im Wesentlichen die Form eines Hohlzylinders mit einem offenen und einem zumindest teilweise durch eine Radialwand geschlossenen Ende hat, wobei die Dichtung und das Trägerteil in der Nähe des offenen Endes angeordnet werden.
